# EUROPÄISCHE PATENTANMELDUNG

(11) **EP 0 589 227 A1**
(43) Veröffentlichungstag der Anmeldung: **30.03.1994**
(21) Anmeldenummer: 93113552.9
(22) Anmeldetag: 25.08.1993
(51) Int. Cl.: B60R 19/56, B60R 19/40, B60R 19/16, B60R 19/14

(54) **Aufprallschutzvorrichtung an Fahrzeugen**

(30) Priorität: 19.09.1992 DE 4231425
(71) Anmelder: MAN Nutzfahrzeuge Aktiengesellschaft, 80976 München (DE)
(72) Erfinder: Rieck, Gerhard, Dipl.-Ing., D-81247 München (DE); Mertens, Armin, D-80993 München (DE); Hinze, Peter, D-85250 Altomünster (DE)

(57) **Zusammenfassung**

Die Erfindung bezieht sich auf eine Aufprallschutzvorrichtung (1) an Nutzfahrzeugen mit einer in der Ebene von Pkw-Stoßstangen angeordneten, energieaufnehmende Vorrichtung (2), die auch zur seitlichen Ableitung von auffahrenden Personenkraftwagen ausgelegt sein kann. Die energieaufnehmende Vorrichtung (2) ist beim Überschreiten einer bestimmten Grenzgeschwindigkeit in einen höheren Geschwindigkeitsbereich aus einer inneren, unterhalb der Fahrerhausfront (3) und parallel zu ihr angeordneten Position (4) automatisch in eine um eine zulässige Deformationszone (a) in Fahrtrichtung vorgeschobene Position (5) ausfahrbar.

## Beschreibung

Die Erfindung bezieht sich auf eine Aufprallschutzvorrichtung in Nutzfahrzeugen mit einer in der Ebene von Pkw-Stoßstangen angeordneten, energieaufnehmenden Vorrichtung, auch zur seitlichen Ableitung von auffahrenden Personenkraftwagen.

Eine derartige Aufprallschutzvorrichtung ist gemäß der EP 0 332 830 A2 bekannt. Diese Einrichtung resultierte aus der Erkenntnis, daß beim Frontalzusammenstoß zwischen einem Nutzfahrzeug und einem Pkw die Risiken im hohen Maße ungleich verteilt sind. Wegen der ungleichen Massen- bzw. Energieverteilung ist das Risiko eines Pkws bzw. Pkw-Insassen, bei einem Zusammenstoß mit einem Nutzfahrzeug zu Schaden zu kommen, ungleich größer als das des Nutzfahrzeuges bzw. dessen Fahrers. Zusätzlich zu den Massenverhältnissen kommt das Problem der Fixierung des Pkws beim Zusammenstoß mit dem Nutzfahrzeug, da besonders beim Pkw die Energieleistung in einer Höhe über der Fahrbahn geschieht, in der ein Lkw keine energieaufnehmende Struktur besitzt und damit vom Nutzfahrzeug überfahren bzw. überrollt werden kann. Bei der bekannten Aufprallschutzvorrichtung wird bei einem Zusammenstoß mit einem Pkw ein Teil der Bewegungsenergie durch eine an sich bekannte energieaufnehmende Struktur in Verformungsenergie oder dergleichen umgewandelt und gleichzeitig durch die Ableitung des auffahrenden Pkws die ungleiche Masse- und Energieverteilung zwischen den beiden Fahrzeugen, so lange das Nutzfahrzeug noch in Bewegung ist, kompensiert und die Gefahr des Überrollens des Pkws deutlich verringert.

Der Erfindung liegt die Aufgabe zugrunde, eine in größeren Gefährdungsbereichen wirksamere Aufprallschutzvorrichtung zu schaffen.

Dies wird erfindungsgemäß dadurch erreicht, daß die energieaufnehmende Vorrichtung beim Überschreiten einer bestimmten Grenzgeschwindigkeit in einen höheren Geschwindigkeitsbereich aus einer inneren, unterhalb der Fahrerhausfront und parallel zu ihr angeordneten Position automatisch in eine um eine zulässige Deformationszone in Fahrtrichtung vorgeschobene Position ausfahrbar ist. Solcherart wird eine über den oben aufgezeigten Stand der Technik weit hinaufgehende Wirkung erzielt. Eine für eine Schutzzone für Pkws notwendige grundsätzliche Verlängerung im Frontbereich verbietet die möglichst lang zu bauende Ladefläche der Fahrzeuge sowie deren Wendigkeit. Im Rahmen der Erfindung wird davon ausgegangen, daß deshalb nur bei höheren Geschwindigkeiten außerhalb von Ortschaften sowohl von der Mobilität als auch vom Straßenverkehr eine im Vergleich zur Gesamtlänge geringfügige Verlängerung des Fahrzeuges nach vorne akzeptabel ist. Die Aufprallschutzvorrichtung ist also abhängig von der Geschwindigkeit. Sie fährt also erst bei einer höheren Geschwindigkeit, z.B. bei einer über der Ortsgeschwindigkeit liegenden Richtgeschwindigkeit von 50 km/h in seine energieverzehrende und richtungsabweisende Funktion aus.

Gemäß zwei Ausführungsvarianten kann der Aufprallschutz entweder einteilig oder mindestens zweiteilig ausgebildet sein, wobei er im ersteren Falle durch zwei energieabsorbierende Zylinder nach vorne ausgeschoben werden kann und diese Zylinder gemäß einer später ausgeführten Absorptionsschaltung hydraulisch abgestützt sind. Die Energiebarriere kann auch nur einseitig eingesetzt sein, wobei dann über ein Langloch im Aufprallschutz eine Schrägstellung und somit eine Ableitfunktion des Aufprallschutzes entsteht. Durch das einseitige Einfahren erfährt der aufprallende Pkw eine Änderung seiner Bewegungsrichtung, nämlich weg vom schweren Nutzfahrzeug. In einteiliger Ausbildung kann der Aufprallschutz aber auch über zwei Knickhebel in seiner vorgeschobenen Position an der Quertraverse des Fahrzeugrahmens abgestützt sein, wobei die Knickzylinder in ihrem Knickbereich mit an der Quertraverse gelenkig befestigten Stellzylindern verbunden sind, die, in schräger Anstellung zu den Knickhebeln, die ein- oder ausgefahrene Position des Aufprallschutzes bewirken.

In der anderen grundsätzlichen Variante der Erfindung besteht der Aufprallschutz aus zwei Aufprallschutzhälften, die an den Enden einer zum Fahrzeugrahmen gehörigen Quertraverse gelenkig gelagert sind und sich mit ihren freien Enden in der Verlängerung der Fahrzeuglängsachse treffen und ineinander schiebbar ausgebildet sind. Es können dann Knickhebel vorgesehen sein, die je aus zwei Hälften bestehen und um einen Knickgelenkpunkt klappbar sind, wobei die Klappung über einen Hydraulik- oder Pneumatikzylinder geschieht.

Es sind mehrere Ausführungsbeispiele der über die Fahrzeuglängsmitte ineinander klappbaren Aufprallschutzhälften beschrieben und gezeigt.

Nach einer davon abweichenden Ausführung sind die beiden Aufprallschutzhälften in Verlängerung der Fahrzeuglängsrichtung gelenkig miteinander verbunden, und der bei Ein- und Ausfahren notwendige Längenausgleich geschieht über an den Enden der Quertraverse angebrachten Koppeln.

Die Erfindung ist in mehreren Ausführungsbeispielen dargestellt und beschrieben.

Es zeigen:
- Fig. 1: eine Aufprallsituation in der Seitenansicht mit der erfindungsgemäßen Aufpralleinrichtung beim Nutzfahrzeug,
- Fig. 2: die Vorderansicht eines Nutzfahrzeuges mit der erfindungsgemäßen Aufprallschutzvorrichtung,
- Fig. 3: Aufprallschutzvorrichtung mit einteiligem Aufprallschutz in der vorgeschobenen Stellung,
- Fig. 3a: Variante einer einteiligen Aufprallschutzvorrichtung in der ausgefahrenen Stellung,
- Fig. 4: Aufprallschutzvorrichtung mit einteiligem Aufprallschutz in der ableitenden Stellung,
- Fig. 4a: Variante einer einteiligen Aufprallschutzvorrichtung in der eingefahrenen Stellung,
- Fig. 5: zweiteilige Aufprallschutzvorrichtung in der vorgeschobenen Stellung,
- Fig. 6: zweiteilige Aufprallschutzvorrichtung in der zusammengeschobenen Stellung,
- Fig. 7: Variante einer zweiteiligen Aufprallschutzvorrichtung in der ausgefahrenen Stellung,
- Fig. 8: Variante einer zweiteiligen Aufprallschutzvorrichtung in der eingefahrenen Stellung,
- Fig. 9: Variante einer in der ausgefahrenen Stellung,
- Fig. 10: Variante einer zweiteiligen Aufprallschutzvorrichtung in der eingefahrenen Stellung,
- Fig. 11: Variante einer zweiteiligen Aufprallschutzvorrichtung mit einem Mittengelenk in der ausgefahrenen Stellung,
- Fig. 12: Variante einer zweiteiligen Aufprallschutzvorrichtung mit Mittengelenk in der eingefahrenen Stellung,
- Fig. 13: Variante einer zweiteiligen Aufprallschutzvorrichtung mit Mittengelenk in der ausgefahrenen Stellung,
- Fig. 14: zweiteilige Aufprallschutzvorrichtung mit Mittengelenk in der eingefahrenen Stellung,
- Fig. 15: dreiteilige Aufprallschutzvorrichtung in der ausgefahrenen Stellung,
- Fig. 16: dreiteilige Aufprallschutzvorrichtung in der eingefahrenen Stellung,
- Fig. 17: Hydraulikschaltplan.

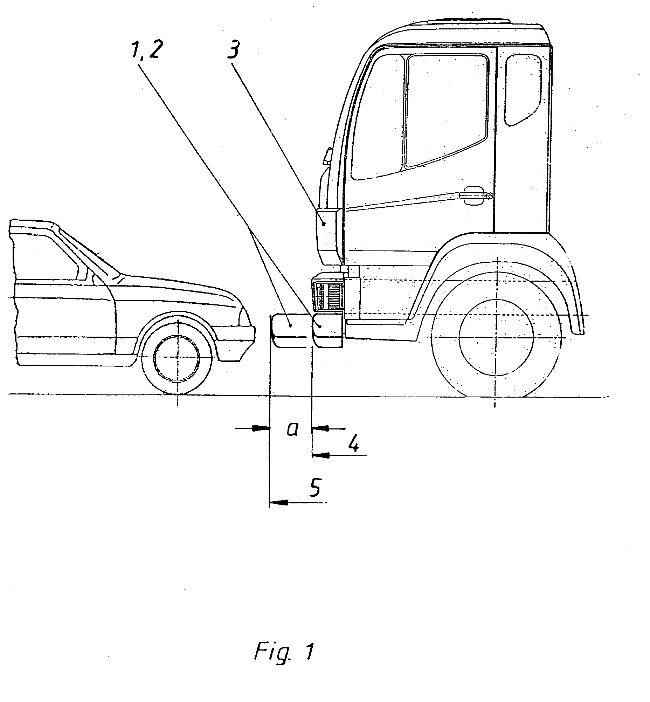

Fig. 1 zeigt die Kollisionssituation zwischen einem Nutzfahrzeug und einem Personenkraftwagen. Das Nutzfahrzeug weist eine in der Ebene der Pkw-Stoßstange angeordnete Aufprallschutzvorrichtung 1 mit einer energieaufnehmenden Vorrichtung 2 auf. Die energieaufnehmenden Vorrichtung 2 ist unterhalb eines Geschwindigkeitslimits, z.B. bei Stadtfahrten (50 km/h) innerhalb der Fahrerhauskontur 4 in etwa parallel zur Fahrerhausfrontwand angeordnet. Bei Überschreiten der Grenzgeschwindigkeit ist die energieaufnehmende Vorrichtung 2 aus der innerhalb der Fahrerhauskontur 4 liegenden Position automatisch in die vorgeschobene Position 5 bringbar, d.h. vor allem bei Überlandfahrten, wenn die Geschwindigkeit größer wird und damit auch die Aufprallenergie, die bekanntlich im Quadrat der Geschwindigkeit steigt.

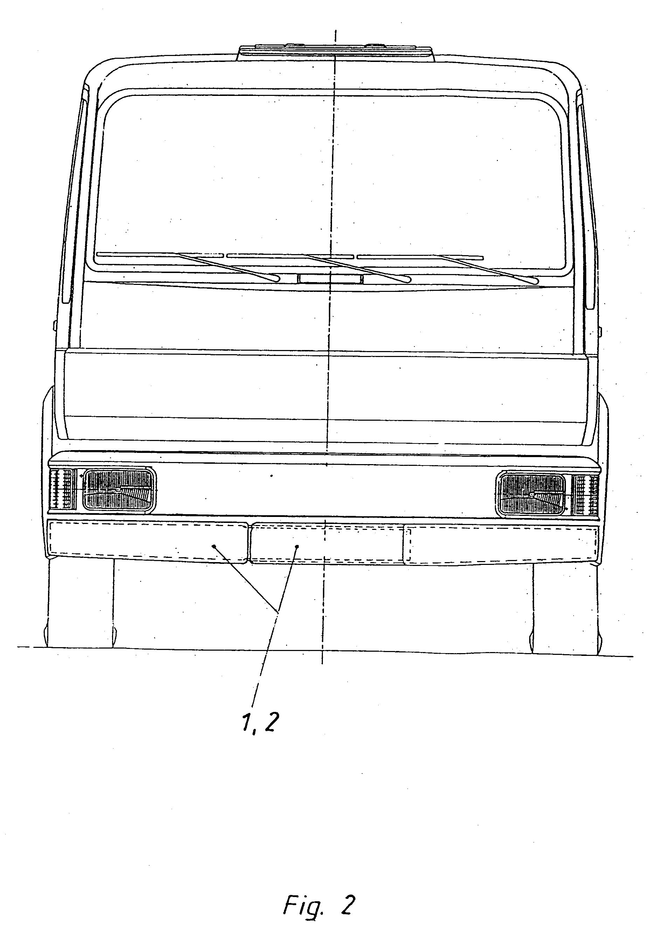

Fig. 2 zeigt das Prinzip der Anordnung der Aufprallschutzvorrichtung 1 in der Vorderansicht.

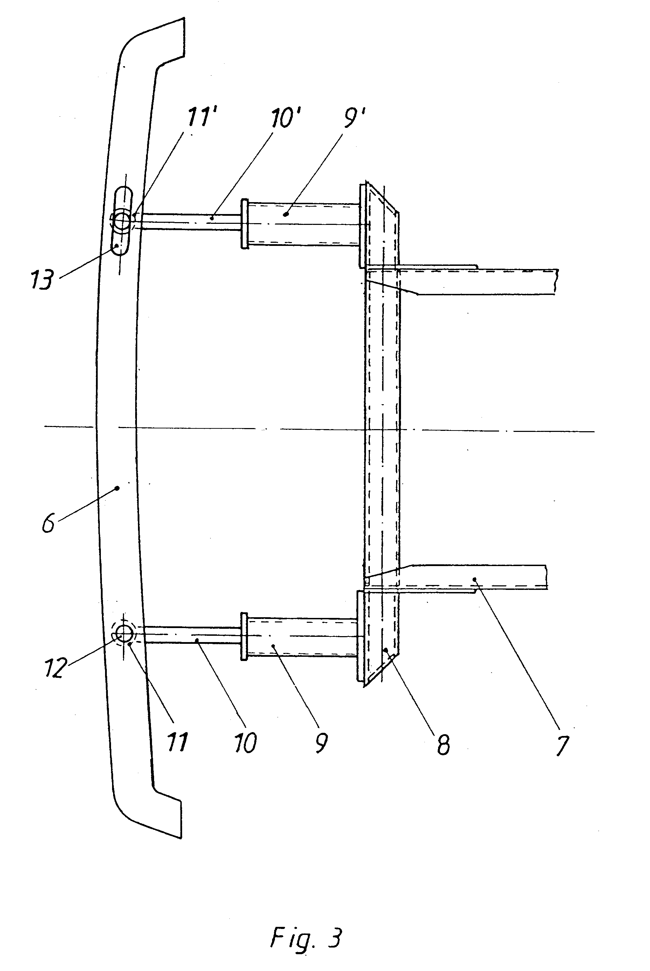

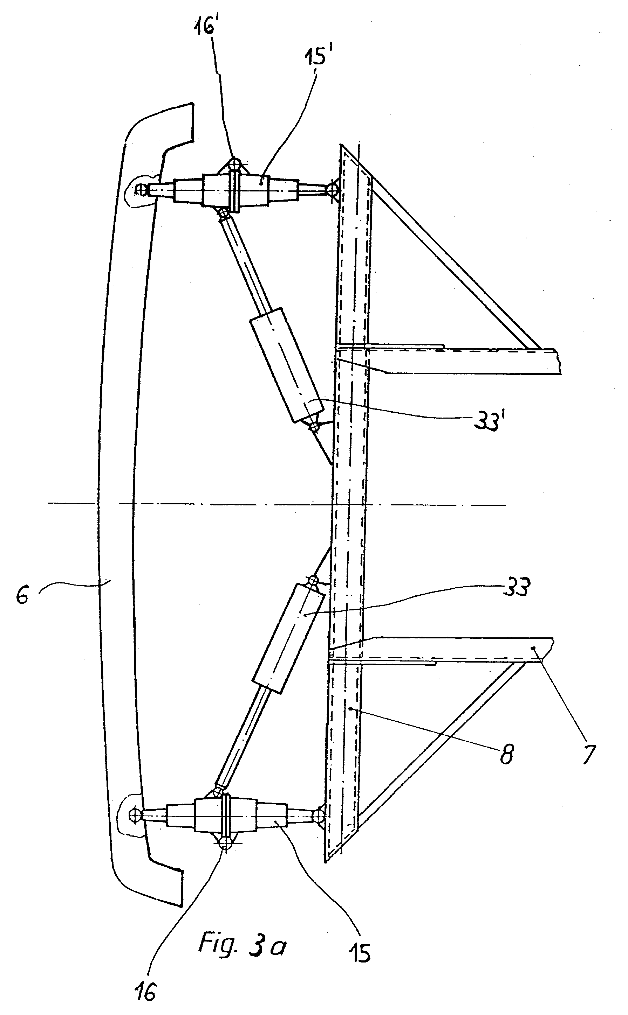

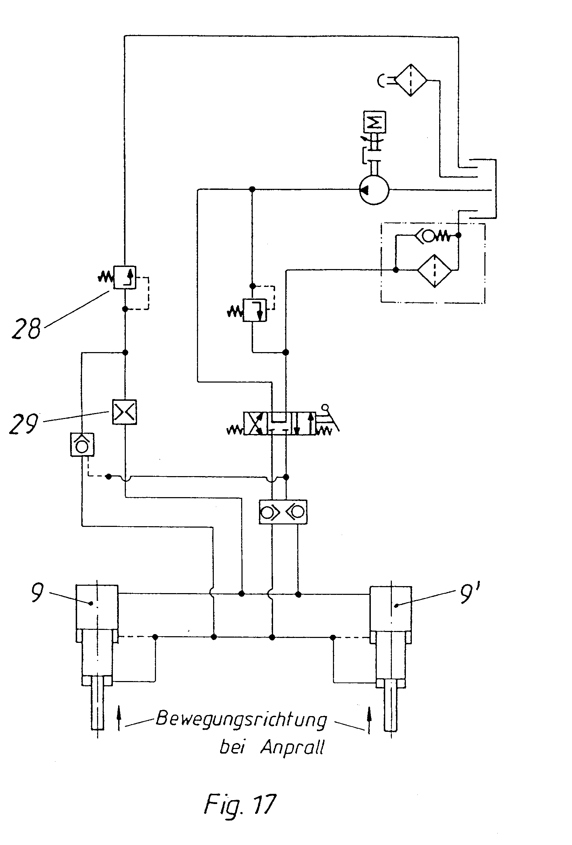

Aus Fig. 3 ist eine Ausführungsform der Erfindung mit einem einteiligen Aufprallschutz 6 zu ersehen, der über die Zylinder 9 und 9' aus- und einfahrbar ist. Die Zylinder 9 und 9' stützen sich an der Quertraverse 8 des Fahrzeugrahmens 7 ab. Der Kolben 10 des Zylinders 9 ist an seinem Ende 11 gelenkig 12 im Aufprallschutz 6 gelagert. Auf der anderen Seite ist die Kolbenstange 10' des Zylinders 9' im Langloch 13 des Aufprallschutzes 6 längsverschieblich angeordnet. Es kann auch alternativ ein zweites Gelenk vorgesehen sein. Die Zylinder 9, 9' sind, wie auch bei nachfolgend erläuterten Ausführungsbeispielen, mit einer Absorptionsschaltung nach Fig. 17 zusammengeschaltet, wobei die Zylinder auch als Teleskopzylinder ausgebildet sein können. Im Hydrauliksystem sind funktionswesentlich ein Überdruckventil 28 mit einem vorgeschalteten Drosselventil 29 vorgesehen. Im Kollisionsfall werden bei Erreichen einer gewissen Aufprallenergie die Kolben 10, 10' gegen den Widerstand des Überdruckventils 28 eingefahren, wobei die Aufprallenergie über das Drosselventil 22 vernichtet wird.

Fig. 3a zeigt eine Variante der einteiligen Aufprallschutzvorrichtung in der ausgefahrenen Position, wobei der einteilige Aufprallschutz 6 über 2 Knickhebel 15, 15' an der Quertraverse 8 des Fahrzeugrahmens 7 abgestützt ist. Die Knickhebel 15, 15' sind in ihrem Knickbereich mit an der Quertraverse 8 gelenkig befestigten, mit Druckluft, hydraulisch oder elektromechanisch beaufschlagten Stellzylindern 33, 33' verbunden, die, in schräger Anstellung zu den Knickhebeln 15, 15' die ein- oder ausgefahrene Position des Aufprallschutzes 6 bewirken.

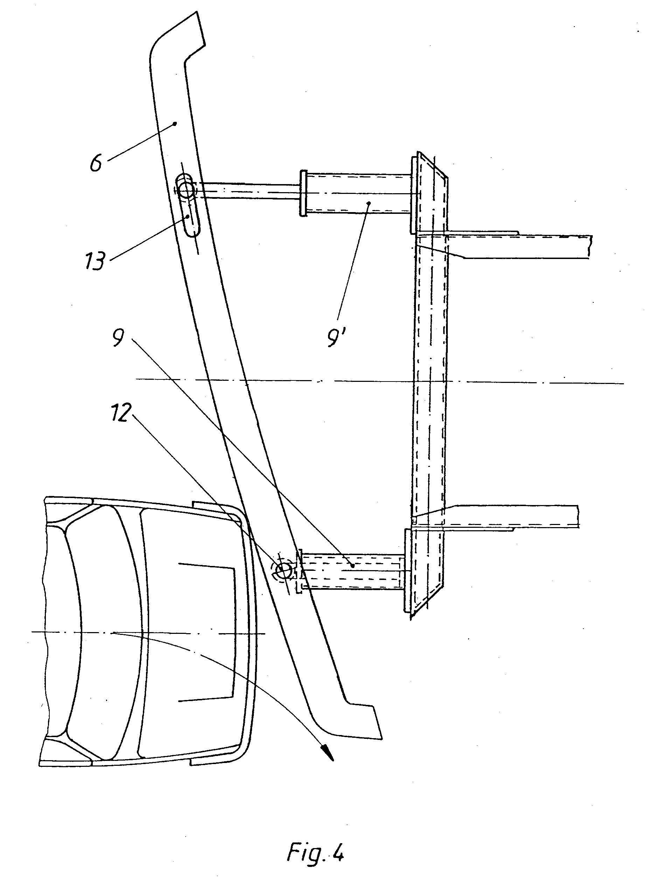

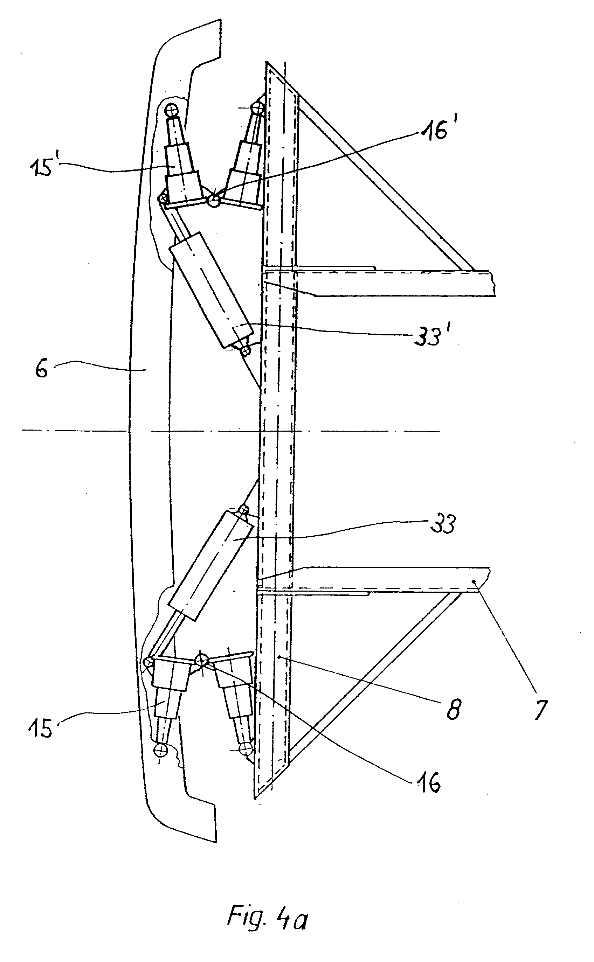

Fig. 4 zeigt die Situation bei einem einseitig auffahrenden Pkw, wobei der Aufprallschutz 6 sich unter Vernichtung von Energie schräg stellt und eine abweisende Funktion einnimmt, so daß der Pkw, die Gefahrensituation mindernd, zur Seite abgelenkt wird.

Aus Fig. 4a ist zu ersehen, wie der Aufprallschutz 6 über die in den Knickhebeldrehpunkten 16, 16' abgeknickten Knickhebelhälften in die eingefahrene Position gebracht worden ist.

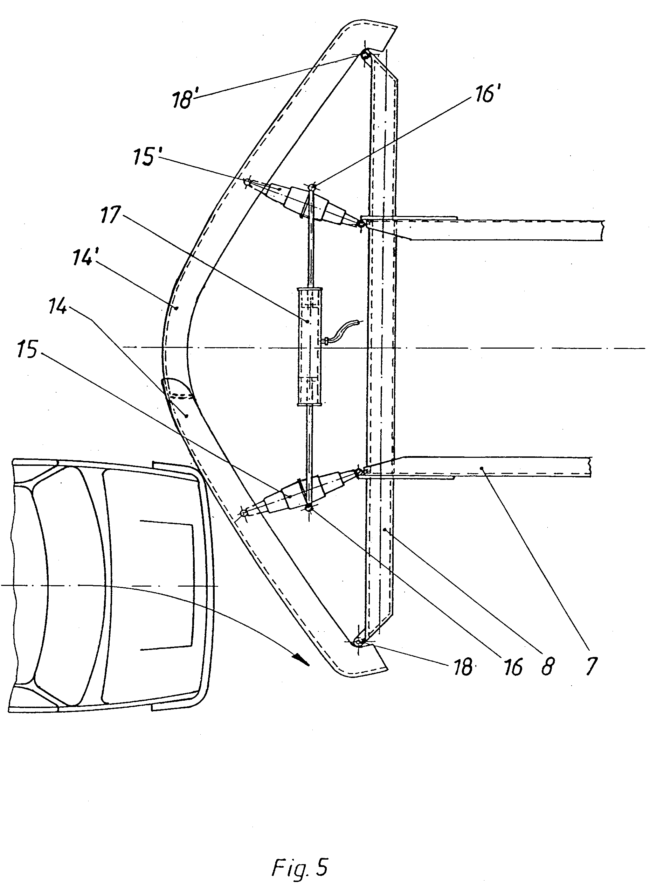

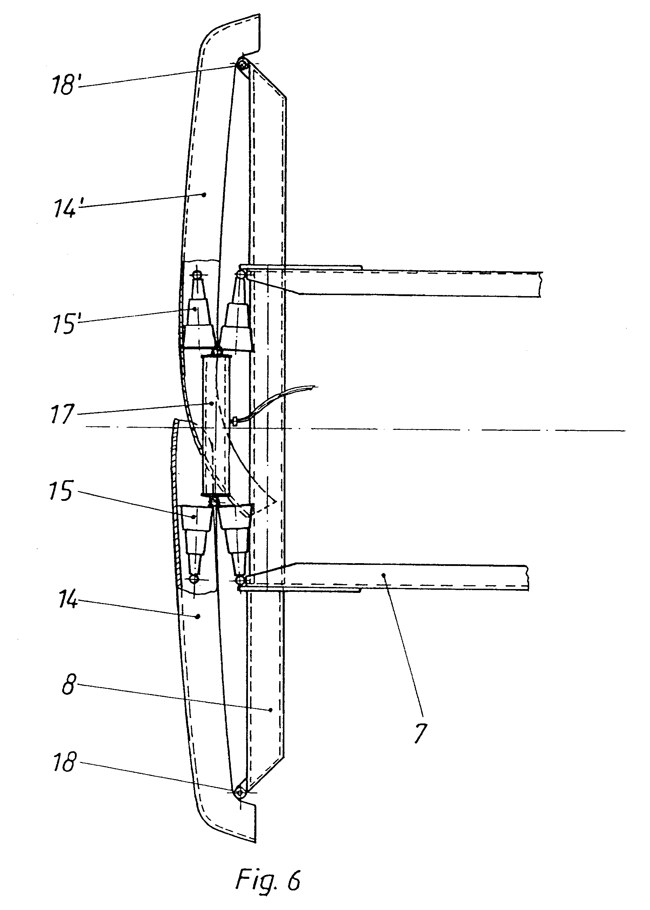

Fig. 5 zeigt eine Aufprallschutzvorrichtung in zweiteiliger Ausführung mit den Aufprallschutzhälften 14, 14', die in an der Quertraverse 8 des Fahrzeugrahmens 7 befindlichen Drehgelenken 18, 18' drehbar gelagert sind. Die beiden Aufprallschutzhälften 14 und 14' sind über Knickhebel 15, 15' gegenüber dem Fahrzeugrahmen 8(7) abgestützt. Die Knickhebel 15, 15' bestehen aus zwei um Knickdrehpunkte 16, 16' klappbare Hälften. Die Knickdrehpunkte 16, 16' können über einen Ein- bzw. Ausschubzylinder 17 gelenkig miteinander verbunden sein. Die Aufprallschutzhälften 14, 14' schließen mit ihren freien Enden in der ausgefahrenen Stellung in der Verlängerung der Fahrzeuglängsachse miteinander ab. Die freien Enden sind so gestaltet, daß bei Einfahren derselben sie sich ineinander verschachteln und in Parallelstellung vor der Quertraverse 8 anlegen (Fig. 6).

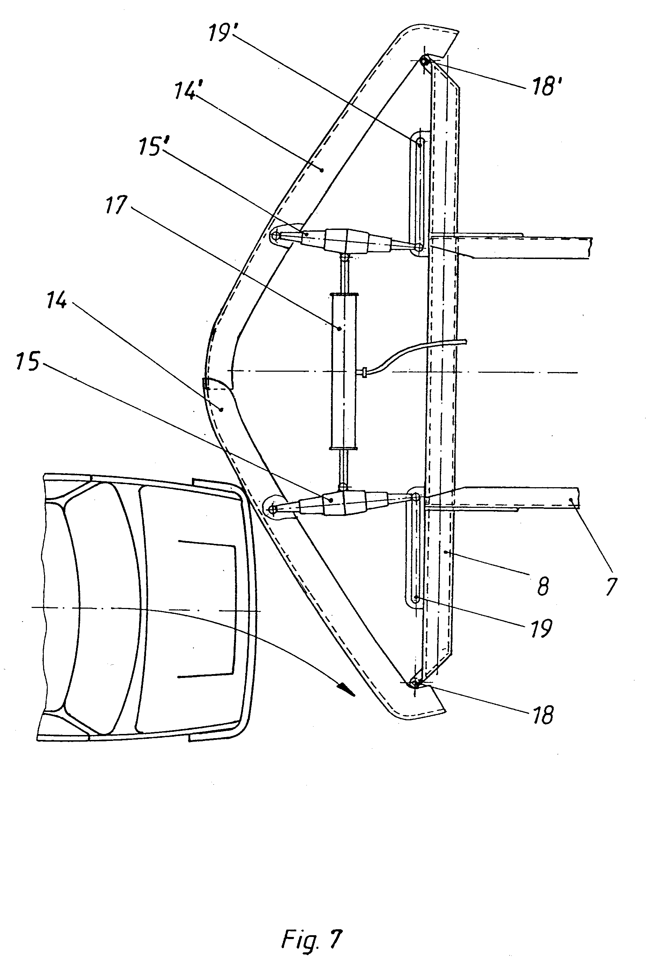

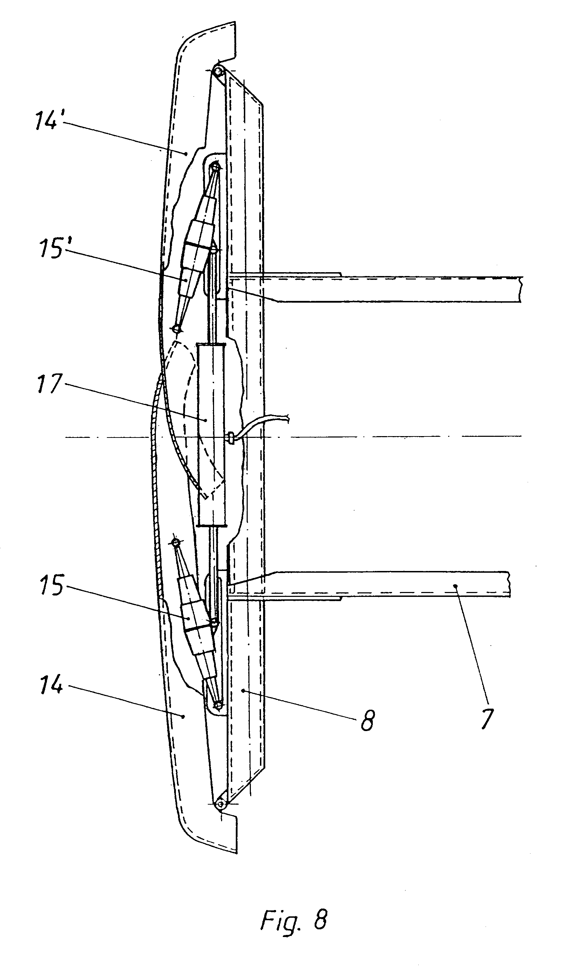

In einer anderen Variante der Erfindung gemäß Fig. 7 sind die Hebel 15, 15' als Absorptionshebel ausgebildet, wobei der notwendige Freiheitsgrad über die an der Quertraverse 8 angeordneten Langlöcher 19 und 19' erfolgt. Die Absorptionshebel werden über einen oder mehrere Pneumatikzylinder 17 betätigt. Fig. 8 zeigt die auf der Ausführungsbasis von Fig. 7 dargestellte eingefahrene Stellung der Aufprallschutzhälften 14, 14'.

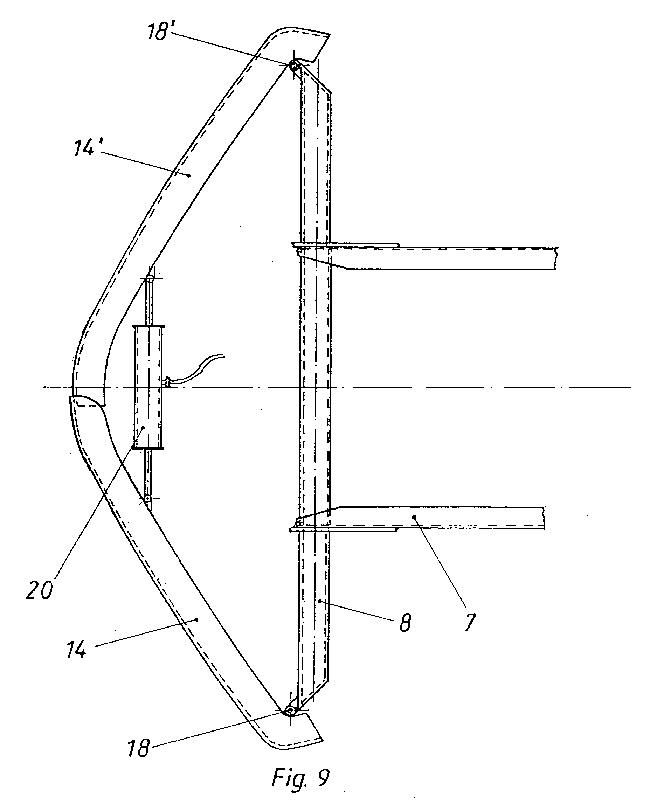

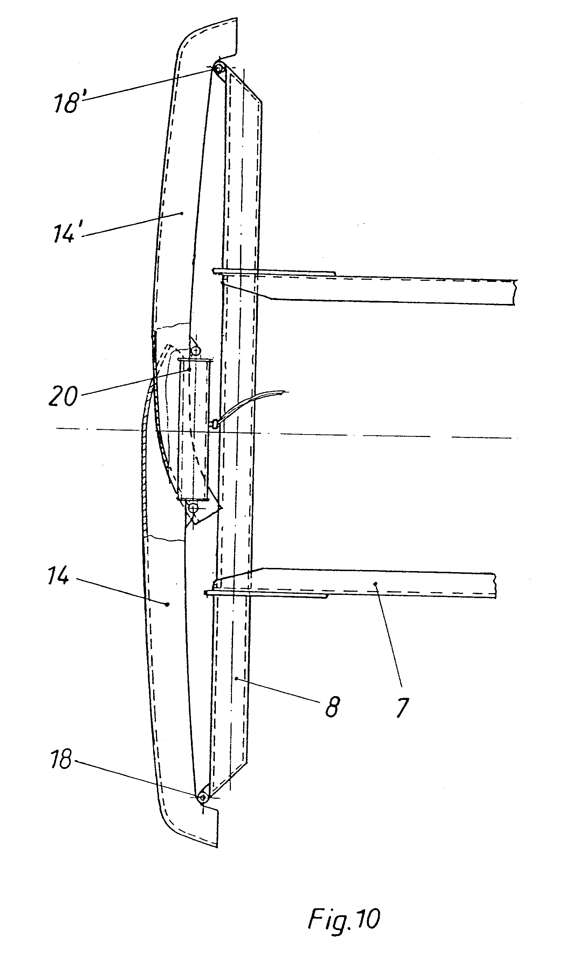

In der Ausführungsform gemäß Fig. 9 wird auf Knick- und Absorptionshebel ganz verzichtet. Ein oder mehrere Hydraulikzylinder 20 mit Energieabsorptionsmöglichkeit übernehmen die Ausfahr- und Aufprallarbeit. Fig. 10 verdeutlicht die eingefahrene Situation der Aufprallschutzhälften 14, 14' gemäß Fig. 9.

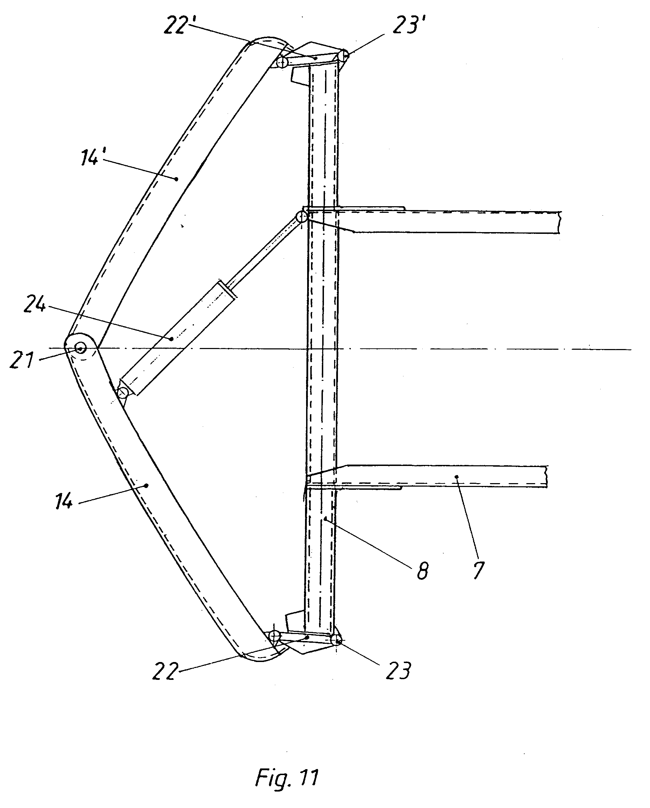

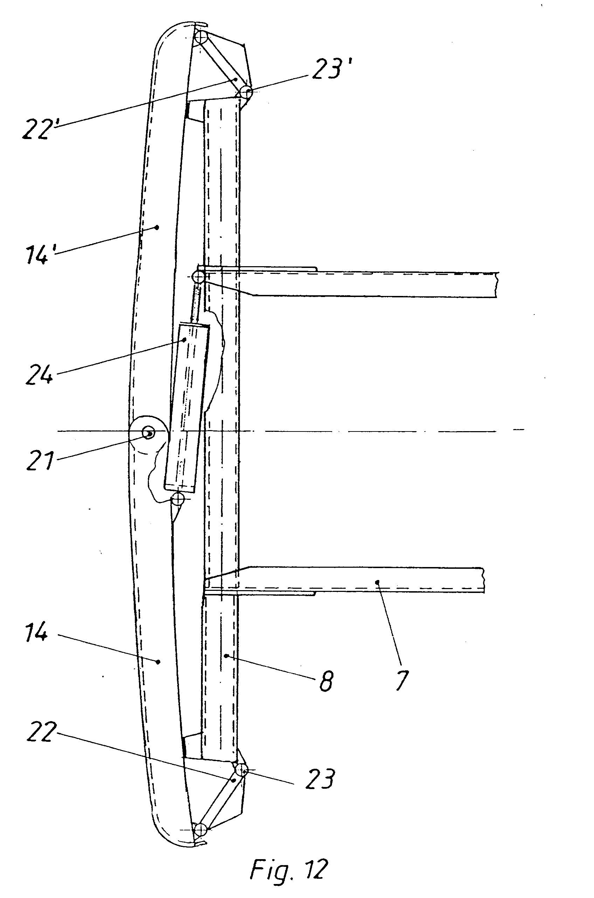

Eine von den vorhergehenden Varianten abweichende Ausführungsform zeigt die Fig. 11. Hier sind die beiden Aufprallschutzhälften 14, 14' in der Verlängerung der Fahrzeuglängsmittelachse über ein Gelenk 21 drehbar miteinander verbunden. Der für die Verschiebung in die eingefahrene Position notwendige Längenausgleich wird über die Koppeln 22, 22' hergestellt, die einerseits an den Aufprallschutzhälften 14, 14' und andererseits an der Quertraverse 8 des Fahrzeugrahmens 7 über Gelenke 23, 23' drehbar gelagert sind. Das Aus- und Einfahren sowie die Energieaufnahme erfolgt über den Hydraulikzylinder 24, der einenendes gelenkig an der Quertraverse 8 und anderenendes gelenkig an einer Aufprallschutzhälfte 14 angebunden ist. Aus Fig. 12 ist die eingefahrene Stellung der vorgeschriebenen Einrichtung zu entnehmen.

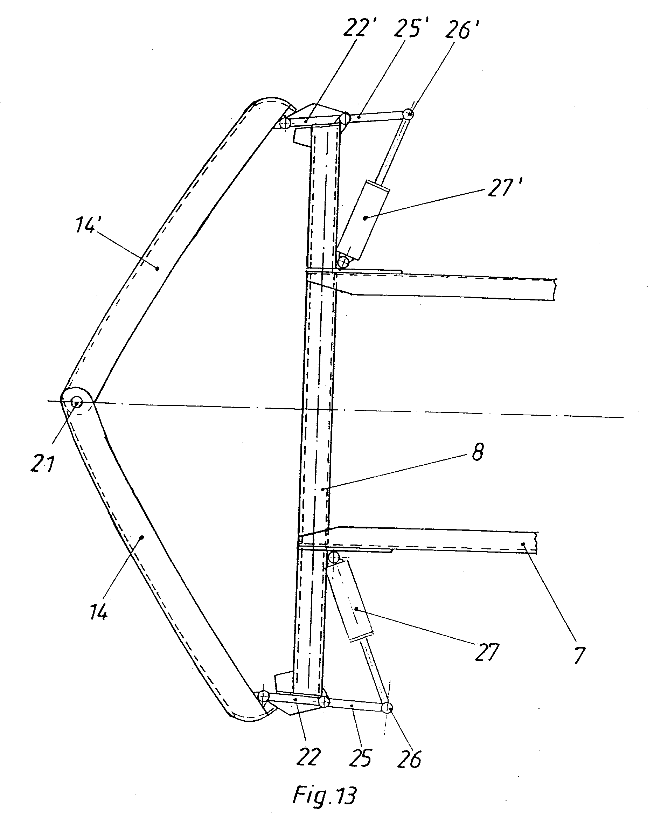

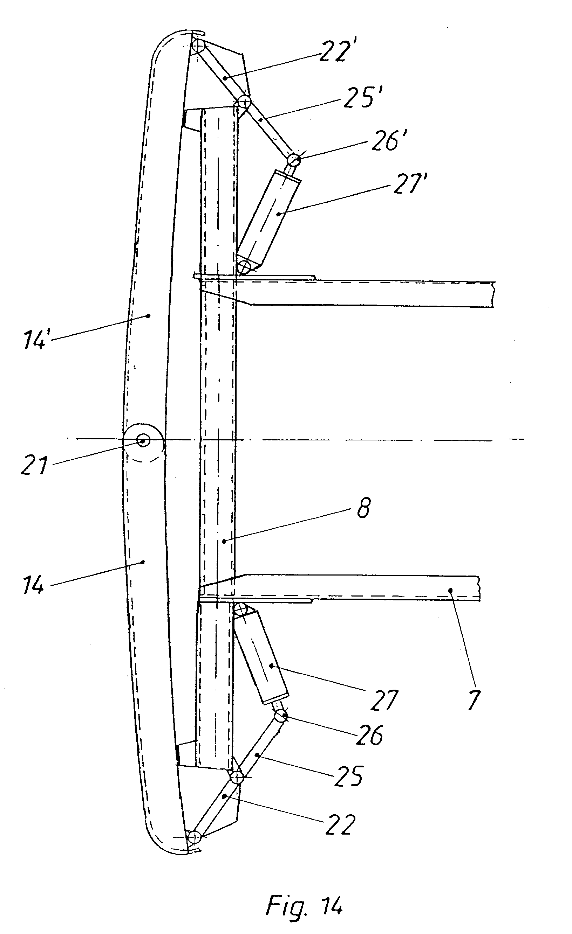

Eine weitere Variante ist in Fig. 13 gezeigt, bei der die Aufprallschutzhälften 14, 14' in der Verlängerung der Fahrzeuglängsmittelebene über das Gelenk 21 drehbar verbunden sind und der Längenausgleich durch die Koppeln 22, 22' erzielt wird, wobei aber über die Drehpunkte 23, 23' Verlängerungsarme 25, 25' der Koppeln vorgesehen sind, die in ihrem Endbereich 26, 26' mit Hydraulikzylindern 27,27' gelenkig verbunden sind, die sich gelenkig gegen den Fahrzeugrahmen 7 und die Quertraverse 8 abstützen. Fig. 14 zeigt die eingefahrene Situation der Aufprallschutzhälften 14, 14' gemäß Fig. 13.

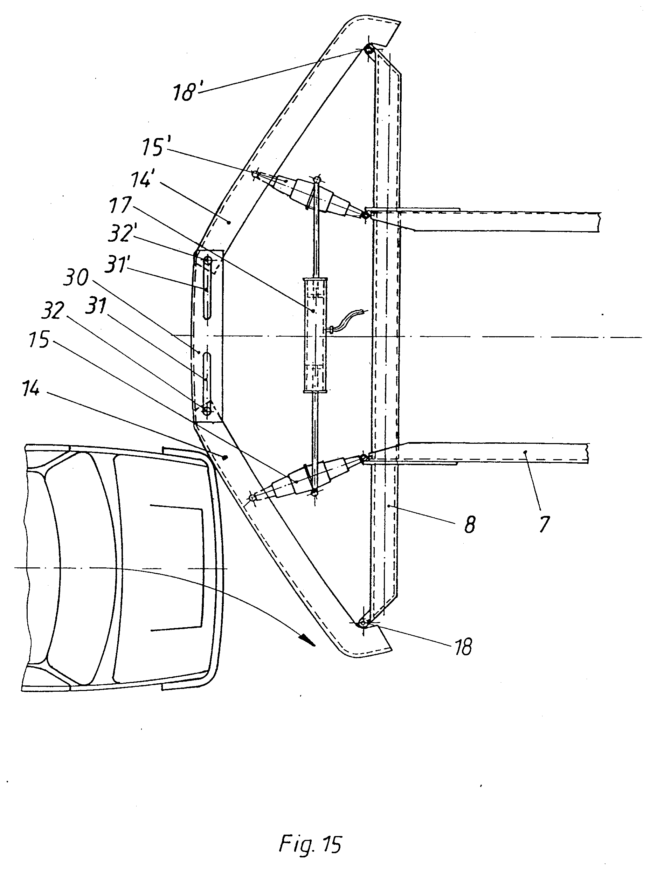

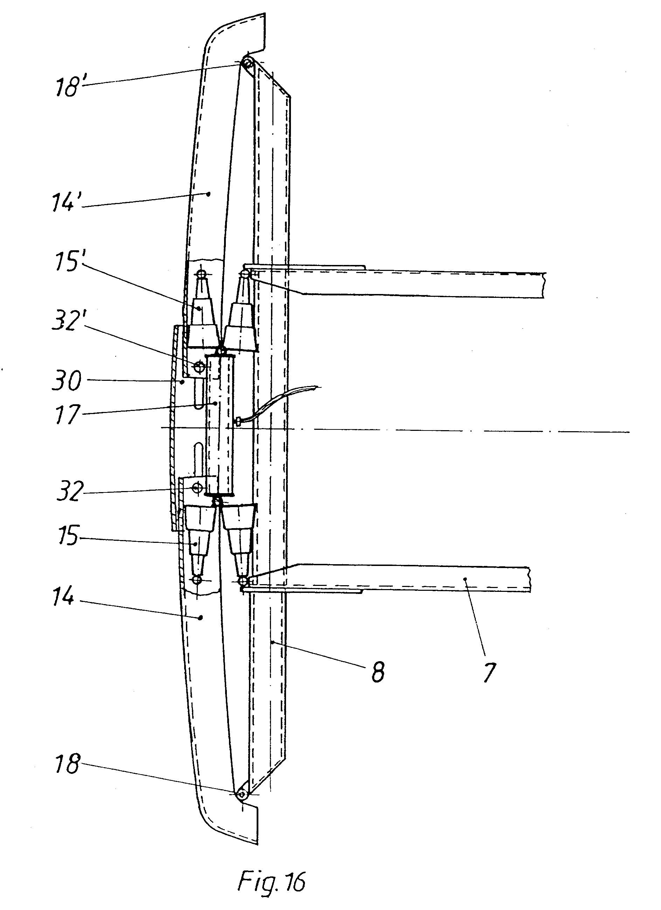

Fig. 15 stellt eine dreiteilige Ausführungsform der Erfindung dar, wobei in Abweichung zu Fig. 5 die freien Enden der Aufprallschutzhälften 14, 14' durch ein parallel zur Quertraverse 8 liegendes Mittelstück 30 verbunden sind und der Längenausgleich in die nach Fig. 16 ineinander geschobene Lage der Aufprallschutzeinrichtung über in dem Mittelstück 30 angebrachte Langlöcher 31, 31' erfolgt, die von den an den freien Enden der Aufprallschutzhälften befestigten Bolzen 32, 32' durchgriffen werden. Die hier beschriebene Ausführung läßt die Aufprallschutzvorrichtung in ausgefahrenem Zustand nicht zu spitz werden.

Fig. 17 wurde schon im Rahmen der vorhergehenden Beschreibung erläutert.

### Bezugszeichenliste

- 1: Aufprallschutzvorrichtung
- 2: energieaufnehmende Vorrichtung
- 3: Fahrerhausfront, Fahrerhausvorderwand
- 4: innere Position
- 5: vorgeschobene äußere Position
- 6: Aufprallschutz
- 7: Fahrzeugrahmen
- 8: Quertraverse von 7
- 9,9': Hydraulikzylinder
- 10,10': Kolbenstange
- 11, 11': Kolbenstangenende
- 12: Gelenk an 11
- 13: Langloch zu 11
- 14, 14': Aufprallschutzhälften
- 15, 15': Knickhebel oder Asorptionshebel
- 16, 16': Knickhebeldrehpunkte
- 17: Ein- bzw. Ausschubzylinder
- 18, 18': Drehgelenke
- 19, 19': Langlöcher an 8
- 20: Hydraulikzylinder
- 21: Gelenk für 14, 14'
- 22, 22': Koppeln
- 23, 23': Gelenke an 8
- 24: Hydraulikzylinder
- 25, 25': Verlängerungsarme von 22, 22'
- 26, 26': freie Enden von 25, 25'
- 27, 27': Hydraulikzylinder
- 28: Überdruckventil
- 29: Drosselventil
- 30: Mittelstück
- 31, 31': Langlöcher in 30
- 32, 32': Bolzen an 14, 14'
- 33, 33': Stellzylinder

## Patentansprüche

1. Aufprallschutzvorrichtung an Nutzfahrzeugen mit einer in der Ebene von Pkw-Stoßstangen angeordneten, energieaufnehmenden Vorrichtung, auch zur seitlichen Ableitung von auffahrenden Personenkraftwagen, dadurch gekennzeichnet, daß die energieaufnehmende Vorrichtung (2) beim Überschreiten einer bestimmten Grenzgeschwindigkeit in einen höheren Geschwindigkeitsbereich aus einer inneren, unterhalb der Fahrerhausfront (3) und parallel zu ihr angeordneten Position (4) automatisch in eine um eine Deformationszone (a) in Fahrtrichtung vorgeschobene Position (5) ausfahrbar ist.

2. Aufprallschutzvorrichtung nach Anspruch 1, dadurch gekennzeichnet, daß der Aufprallschutz (6) über zwei an einer Quertraverse (8) des Fahrzeugrahmens (7) befestigte Hydraulikzylinder (9, 9') ausfahrbar ist, wobei ein Kolbenstangenende (11) gelenkig (12) und das andere Kolbenstangenende (11') über ein Langloch (13) oder ein Doppelgelenk am Aufprallschutz (6) gehalten sind.

3. Aufprallschutzvorrichtung nach Anspruch 1 oder 2, dadurch gekennzeichnet, daß der Aufprallschutz (6) über Knickhebel (15, 15') in seiner vorgeschobenen Position an der Quertraverse (8) des Fahrzeugrahmens (7) abgestützt ist und die Knickzylinder (15, 15') in ihrem Knickbereich mit an der Quertraverse (8) gelenkig befestigten, mit Druckluft, hydraulisch oder elektromechanisch beaufschlagten Stell-Zylindern (33, 33') verbunden sind, die, in schräger Anstellung zu den Knickhebeln (15, 15') die ein- oder ausgefahrene Position des Aufprallschutzes (6) bewirken.

4. Aufprallschutzvorrichtung nach Anspruch 1, dadurch gekennzeichnet, daß die energieaufnehmende Vorrichtung (2) mindestens zweigeteilt (14, 14') und aus der inneren, zur Fahrerhausvorderwand (3) parallelen Position (4) in eine vorgeschobene Position (5) mit im stumpfen Winkel zueinander angeordneten Aufprallschutzhälften (14, 14') ausfahrbar ist.

5. Aufprallschutzvorrichtung nach Anspruch 1 oder 4, dadurch gekennzeichnet, daß die beiden Aufprallschutzhälften (14, 14') an der Quertraverse (8) des Fahrzeugrahmens (7) angelenkt und in ihrem mittleren Bereich über gelenkig angeordnete Knickhebel (15, 15') in ihrer stumpfwinkligen, vorgeschobenen Position abgestützt sind und ein die beiden Knickhebel (15, 15') in ihren Knick-Drehpunkten (16, 16') verbindender mit Druckluft, hydraulisch oder elektromechanisch beaufschlagter Ein- bzw. Ausschubzylinder (17) vorgesehen ist.

6. Aufprallschutzvorrichtung nach Anspruch 5, dadurch gekennzeichnet, daß die beiden Asorptionshebel (15, 15') rahmenseitig in Langlöchern (19, 19') gehalten sind.

7. Aufprallschutzvorrichtung nach Anspruch 1 oder 4, dadurch gekennzeichnet, daß zwischen den Aufprallschutzhälften (14, 14'), parallel zur Quertraverse (8) des Fahrzeugrahmens (7), ein oder mehrere Hydraulik- oder Pneumatikzylinder (20) in gelenkiger Anbindung angeordnet sind.

8. Aufprallschutzvorrichtung nach den Ansprüchen 1 oder 4, dadurch gekennzeichnet, daß die beiden Aufprallschutzhälften (14, 14') in der Verlängerung der Fahrzeuglängsmittelebene gelenkig (21) miteinander verbunden und anderenends über Koppeln (22, 22') an den Enden der Quertraverse (8) des Fahrzeugrahmens (7) angelenkt (23, 23') sind und ein Hydraulikzylinder (24) schräg zur Quertraverse (8) zwischen dieser und einer Aufprallschutzhälfte (14) gelenkig angeordnet ist.

9. Aufprallschutzvorrichtung nach Anspruch 1 oder 4, dadurch gekennzeichnet, daß die beiden Aufprallschutzhälften (14, 14') in der Verlängerung der Fahrzeuglängsachse gelenkig (21) miteinander verbunden und anderenends über Koppeln (22, 22') an den Enden der Quertraverse (8) des Fahrzeugrahmens (7) angelenkt (23, 23') sind, wobei die Koppeln (22, 22') über ihre rahmenseitigen Gelenke reichenden Verlängerungsarme (25, 25') aufreißen, deren freie Enden (26, 26') über fahrzeuginnenwärts, schräg zur Quertraverse (8) weisenden Hydraulikzylindern (27, 27') gelenkig mit der Quertraverse (8) verbunden sind.

10. Aufprallschutzvorrichtung nach Anspruch 1 oder 4, dadurch gekennzeichnet, daß die beiden Aufprallschutzhälften (14, 14') an ihren inneren Enden über ein Mittelstück (30) verbunden sind, dessen Langlöcher (31, 31') von an den Enden der Aufprallschutzhälften befestigten Bolzen (32, 32') durchgriffen sind.
